# EUROPEAN PATENT SPECIFICATION

(11) **EP 4 626 997 B1**
(45) Date of publication and mention of the grant of the patent: **13.05.2026**
(21) Application number: 24721246.7
(22) Date of filing: 21.03.2024
(51) Int. Cl.: C09K 3/22, C09K 3/18

(54) **METHOD FOR PREVENTING DUST GENERATION FROM AND/OR MOISTURE INCREASE IN OPEN-AIR PILE**
VERFAHREN ZUR VERHINDERUNG DER STAUBENTWICKLUNG UND/ODER FEUCHTIGKEITSERHÖHUNG IN EINEM FREILUFTPFAHL
PROCÉDÉ POUR EMPÊCHER LA GÉNÉRATION DE POUSSIÈRE À PARTIR ET/OU L'AUGMENTATION DE L'HUMIDITÉ DANS UN TAS À L'AIR LIBRE

(30) Priority: 23.03.2023 JP 2023046820
(43) Date of publication of application: 08.10.2025
(73) Proprietor: Kurita Water Industries Ltd., Nakano-ku, Tokyo 164-0001 (JP)
(72) Inventor: TANIYAMA, Natsumi, Tokyo 164-0001 (JP); KIKKAWA, Takashi, Tokyo 164-0001 (JP)
(74) Representative: TBK
(86) International application number: PCT/JP2024/080034
(87) International publication number: WO 2024/195892

(56) References cited:
- CN-A- 101 560 375
- CN-B- 106 939 154

## Description

### Technical Field

The present invention relates to a method for preventing dust generation from and/or moisture increase in an open-air pile.

### Background Art

Powders such as coal, iron ore, slag, dust, chips, wood shavings, sludge paper, and the like are piled in the open air at steel mills, power plants, pulp and paper mills, and other facilities. The open-air piled powder generates dust, which causes environmental problems. In addition, heavy rains or the like can cause landslides, coal flows (a phenomenon in which coal piled in the open air flows and collapses due to an increased moisture content of the coal that causes the coal to become slurry), or the like. Also, when, for example, it rains, rainwater permeates the powder and increases the moisture content of the powder. The increase in moisture content of open-air piled powder causes the powder to consume extra energy to evaporate the moisture when the powder is used as fuel, resulting in a large economic loss and increased CO₂ emissions. Additionally, when open-air piled powder is raw material coal, it has various adverse effects on the coke manufacturing process.

Thus, techniques to suppress the increase in moisture content of open-air piled powder are demanded.

PTL 1 discloses the use of an acrylic-based emulsion resin as a hydrophobic treatment agent for an open-air pile. The hydrophobic treatment agent is sprayed onto, applied to, or kneaded with the pile to form hydrophobic portions on the surface of the particles of the pile.

PTL 2 discloses spraying an emulsion resin solution containing polymer particles having particle sizes of 0.3 µm to 3 µm in average particle diameter and 0.2 µm or more in standard deviation onto an open-air pile. The use of an emulsion resin solution whose polymer particles are large in particle diameter and wide in particle size distribution, as above, forms thick and strong coating films that are difficult to crack on the pile, preventing dust generation from or moisture increase in the open-air pile.

CN 106 939 154 B describes an anti-mite dust suppressant agent that is sprayed to prevent dust generation.

### Citation List

### Patent Literature

PTL 1: JP 01-38723 B
PTL 2: JP 2013-203525 A

### Summary of Invention

### Technical Problem

For the hydrophobic treatment agent disclosed in PTL 1, the resultant film is weak in strength and fragile and may crack, undesirably allowing rainwater or the like to penetrate.

The method disclosed in PTL 2 is also insufficient in terms of film strength, and the film cracks in some cases.

An object of the present invention is to provide a method for preventing dust generation from and/or moisture increase in an open-air pile, which can increase the strength of the coating film made of a coating agent to coat particles of the open-air pile and reliably prevent moisture increase in the open-air pile.

### Solution to Problem

After earnest examination, the present inventors have found that an emulsion containing acrylic-based resin and polyvinyl alcohol-based resin can provide a coating film improved in film strength and reliably prevent moisture increase in an open-air pile. The present invention is based on such findings.

The present invention is defined by the apended claims.

In an embodient, the method is characterized in that the styrene acrylic resin is a polymer of monomers including a styrene-based monomer and one or more selected from the group consisting of (meth)acrylic acids and (meth)acrylic acid esters, the styrene-based monomer being styrene, the one or two or more selected from the group consisting of (meth)acrylic acids and (meth)acrylic acid esters being one or more selected from the group consisting of 2-ethylhexyl acrylate, methyl methacrylate, butyl acrylate, and acrylic acid.

In an embodiment, the method is characterized in that in the total amount of raw material monomers of the styrene acrylic resin, the blended amount of the styrene-based monomer is 5% to 70% by mass, and the blended amount of the one or more selected from the group consisting of (meth)acrylic acids and (meth)acrylic acid esters is 30% to 95% by mass.

In another embodiment, the method is characterized in that the vinyl acetate acrylic resin is a polymer of monomers including vinyl acetate and one or more selected from the group consisting of (meth)acrylic acids and (meth)acrylic acid esters, the one or more selected from the group consisting of (meth)acrylic acids and (meth)acrylic acid esters being one or more selected from the group consisting of 2-ethylhexyl acrylate, methyl methacrylate, butyl acrylate, and acrylic acid.

In a further embodiment, the method is characterized in that in the total amount of raw material monomers of the vinyl acetate acrylic resin, the blended amount of the vinyl acetate is 10% to 95% by mass, and the blended amount of the one or more selected from the group consisting of (meth)acrylic acids and (meth)acrylic acid esters is 5% to 90% by mass.

In yet another embodiment, the method is characterized in that the total amount of vinyl alcohol groups and vinyl ester groups in the entirety of structural units of the polyvinyl alcohol-based resin is 80% to 100% by mass.

In another further embodiment, the method is characterized in that the polyvinyl alcohol-based resin has a viscosity-average degree of polymerization of 100 to 10,000.

In yet another further embodiment, the method is characterized in that the polyvinyl alcohol-based resin has a saponification degree of 70% to 95% by mole.

### Advantageous Effects of Invention

The present invention can provide a method for preventing dust generation from and/or moisture increase in an open-air pile, which can increase the strength of the coating film made of a coating agent to coat the particles of the open-air pile and reliably prevent moisture increase in the open-air pile.

### Description of Embodiments

The method according to the present invention for preventing dust generation from and/or moisture increase in an open-air pile will now be described.

The term "(meth)acrylic" used herein refers to acrylic and methacrylic.

The term "solids" used herein refers to the constituents except the dispersion medium.

### [Coating Agent for Open-Air Pile]

The coating agent used in the present invention for an open-air pile is an O/W emulsion containing acrylic-based resin and polyvinyl alcohol (also referred to as "PVA")-based resin.

The coating agent, which contains PVA-based resin in addition to acrylic-based resin, can provide a film improved in strength and reliably prevent moisture increase in an open-air pile, compared to the case of not containing PVA-based resin. The details of the reason for this are not known but are presumed to be as follows.

When a known coating agent containing acrylic-based resin but no PVA-based resin is added as a coating agent to an open-air pile, a coating layer made of the acrylic-based resin is formed over the surface of the pile particles. However, the coating layer has low film strength and is expected to crack and allow rainwater or the like to penetrate.

In contrast, when the coating agent according to the present invention, which contains not only acrylic-based resin but also PVA-based resin, is added to an open-air pile, a coating layer made of the acrylic-based resin is formed over the surface of the pile particles, and a protective layer made of the PVA-based resin is formed over the coating layer made of the acrylic-based resin. In addition, the acrylic-based resin and the PVA-based resin are firmly fused together to increase the film strength. Thus, the resulting film is probably unlikely to crack, preventing the penetration of rainwater or the like.

### <Acrylic-based Resin>

An acrylic-based resin is a polymer of monomers including one or more monomers selected from the group consisting of (meth)acrylic acids and their esters.

The acrylic-based resin used herein may be a polymer of one or more monomers selected from the group consisting of (meth)acrylic acids and their esters, or a polymer of one or more monomers selected from the group consisting of (meth)acrylic acids and their esters and one or more of other monomers.

Preferably, the acrylic-based resin is a styrene acrylic resin and/ or a vinyl acetate acrylic resin.

### [Styrene Acrylic Resin]

A styrene acrylic resin refers to a polymer of monomers including a styrene-based monomer and one or more selected from the group consisting of (meth)acrylic acids and (meth)acrylic acid esters.

### (Styrene-based Monomer)

Styrene-based monomers include styrene and styrene derivatives, such as α-methylstyrene. The styrene-based monomer is preferably styrene.

### ((Meth)acrylic Acids and (Meth)acrylic Acid Esters)

(Meth)acrylic acids refer to acrylic acid and methacrylic acid.

(Meth)acrylic acid esters include (meth)acrylic acid alkyl esters with no special functional groups or cyclic structures, (meth)acrylic acid esters containing a hydroxy group, (meth)acrylic acid esters containing a glycidyl group, (meth)acrylic acid esters containing an oxyalkylene group, (meth)acrylic acid esters containing an alicyclic structure, and (meth)acrylic acid esters containing an aromatic ring.

Examples of (meth)acrylic acid alkyl esters with no special functional groups or cyclic structures include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, neopentyl (meth)acrylate, hexyl (meth)acrylate, 3-pentyl (meth)acrylate, hexyl (meth)acrylate, 2-ethylbutyl (meth)acrylate, heptyl (meth)acrylate, 2-heptyl (meth)acrylate, octyl (meth)acrylate, 2-octyl (meth)acrylate, 2-ethylhexyl (meth)acrylate, nonyl (meth)acrylate, decyl (meth)acrylate, undecyl (meth)acrylate, and dodecyl (meth)acrylate. Among these, preferred are butyl (meth)acrylate, isobutyl (meth)acrylate, t-butyl (meth)acrylate, 2-ethylhexyl (meth)acrylate, and dodecyl (meth)acrylate from the viewpoint of water resistance and temporal stability.

Examples of (meth)acrylic acid esters containing a hydroxy group include 2-hydroxyethyl (meth)acrylate, 2-hydroxypropyl (meth)acrylate, 4-hydroxybutyl (meth)acrylate, glycerol mono(meth)acrylate, N-(2-hydroxyethyl)(meth)acrylamide, and allyl alcohol.

Examples of (meth)acrylic acid esters containing a glycidyl group include glycidyl (meth)acrylate and 4-hydroxybutyl (meth)acrylate glycidyl ether.

Examples of (meth)acrylic acid esters containing an oxyalkylene group include diethylene glycol mono(meth)acrylate, polyethylene glycol mono(meth)acrylate, polyethylene glycol polypropylene glycol mono(meth)acrylate, methoxydiethylene glycol mono(meth)acrylate, methoxypolyethylene glycol mono(meth)acrylate, phenoxydiethylene glycol mono(meth)acrylate, phenoxypolyethylene glycol mono(meth)acrylate, ethylene glycol di(meth)acrylate, diethylene glycol di(meth)acrylate, triethylene glycol di(meth)acrylate, and polyethylene glycol di(meth)acrylate.

Examples of (meth)acrylic acid esters containing an alicyclic structure include cyclohexyl (meth)acrylate.

Examples of (meth)acrylic acid esters containing an aromatic ring include benzyl (meth)acrylate.

### (Other Monomers)

The raw material monomers of the styrene acrylic resin may or may not include other monomers apart from the above-cited monomers.

Such other monomers include amide group-containing monomers, vinyl acetate, and other monomers containing reactive functional groups.

Examples of amide group-containing monomers include N-vinylacetamide, (meth)acrylamide, diacetone (meth)acrylamide, N-methyl(meth)acrylamide, N,N-dimethyl(meth)acrylamide, N-ethyl(meth)acrylamide, N,N-diethyl(meth)acrylamide, N-isopropyl(meth)acrylamide, and N-butyl(meth)acrylamide.

### (Blending Proportions)

The blending amount of styrene-based monomer in the total amount of raw material monomers of the styrene acrylic resin is preferably 5% to 70% by mass, more preferably 10% to 60% by mass, and further preferably 10% to 50% by mass and may be 20% to 50% by mass or 35% to 45% by mass.

The blending amount of acrylic monomer in the total amount of raw material monomers of the styrene acrylic resin is preferably 30% to 95% by mass, more preferably 40% to 90% by mass, and further preferably 50% to 90% by mass and may be 50% to 80% by mass or 55% to 65% by mass.

The total blending amount of styrene-based monomer and acrylic monomer in the total amount of raw material monomers of the styrene acrylic resin is preferably 80% to 100% by mass, more preferably 90% to 100% by mass, and further preferably 95% to 100% by mass and may be 100% by mass.

### [Vinyl Acetate Acrylic Resin]

A vinyl acetate acrylic resin refers to a polymer of monomers including vinyl acetate and one or more selected from the group consisting of (meth)acrylic acids and (meth)acrylic acid esters.

### ((Meth)acrylic Acids and (Meth)acrylic Acid Esters)

The types of (meth)acrylic acids and (meth)acrylic acid esters are the same as those described above for styrene acrylic resin.

### (Other Monomers)

The raw material monomers of the vinyl acetate acrylic resin may or may not include other monomers apart from the above-cited monomers.

The types of other monomers are the same as those described above for styrene acrylic resin.

### (Blending Proportions)

The blending amount of vinyl acetate in the total amount of raw material monomers of the vinyl acetate acrylic resin is preferably 10% to 95% by mass, more preferably 15% to 90% by mass, further preferably 20% to 90% by mass, and still further preferably 40% to 90% by mass and may be 60% to 90% by mass or 75% to 85% by mass.

The blending amount of acrylic monomer in the total amount of raw material monomers of the vinyl acetate acrylic resin is preferably 5% to 90% by mass, more preferably 10% to 85% by mass, further preferably 10% to 80% by mass, and still further preferably 10% to 60% by mass and may be 10% to 40% by mass, 10% to 15% by mass or 15% to 25% by mass.

The total blending amount of vinyl acetate and acrylic monomer in the total amount of raw material monomers of the vinyl acetate acrylic resin is preferably 80% to 100% by mass, more preferably 90% to 100% by mass, and further preferably 95% to 100% by mass and may be 100% by mass.

### [Other Resins]

The acrylic-based resin may or may not include other acrylic-based resins apart from the styrene acrylic resin and vinyl acetate acrylic resin but, preferably, does not include acrylic-based resins other than the styrene acrylic resin and vinyl acetate acrylic resin.

The total amount of the styrene acrylic resin and vinyl acetate acrylic resin in the acrylic-based resin is preferably 80% to 100% by mass, more preferably 90% to 100% by mass, and further preferably 95% to 100% by mass.

### [Polymerization Method of Acrylic-based Resin]

The acrylic-based resin can be synthesized by emulsion polymerization, suspension polymerization, bulk polymerization, solution polymerization, or the like. Preferably, the acrylic-based resin is synthesized by emulsion polymerizing a monomer mixture in the presence of surfactant.

The acrylic-based resin is preferably in the form of particles when it is blended into the coating agent. Therefore, after the acrylic-based resin is synthesized by solution polymerization, water, and optionally a surfactant, may be added, and the acrylic-based resin is transferred into an aqueous phase by a known method to form acrylic-based resin particles.

In the polymerization of the acrylic-based resin, a polymerization initiator, a buffer, a chain transfer agent, a basic compound, and other additives may be optionally used.

### <PVA-based Resin>

The PVA-based resin is a resin containing vinyl alcohol groups and vinyl ester groups as structural units. The PVA-based resin may or may not contain other structural units but preferably does not.

The total amount of vinyl alcohol groups and vinyl ester groups in the entirety of structural units of the PVA-based resin is preferably 80% to 100% by mass, more preferably 90% to 100% by mass, and further preferably 95% to 100% by mass.

The saponification degree of the PVA-based resin is preferably 70% to 95% by mole, more preferably 75% to 90% by mole, further preferably 80% to 90% by mole, and still further preferably 85% to 90% by mole.

The saponification degree used herein refers to the percentage (% by mole) of the amount by mole of vinyl alcohol groups to the total amount by mole of the vinyl alcohol groups and vinyl ester groups in the PVA-based resin.

The saponification degree can be measured in accordance with a method specified in JIS K6726 (1994). For the saponification degree of 70 % by mole or less, it should be measured using a 1:1 mixture of water and methanol instead of water used as a solvent in the above method.

The average degree of polymerization (viscosity-average degree of polymerization) of the PVA is not particularly limited but is preferably 100 to 10,000, more preferably 200 to 5,000, and further preferably 400 to 4,000 from the viewpoint of viscosity and water solubility.

The average degree of polymerization (viscosity-average degree of polymerization) can be measured in accordance with a method specified in JIS K6726 (1994).

The PVA-based resin can typically be produced by partially saponifying a vinyl ester-based polymer obtained by polymerizing a vinyl ester compound (vinyl acetate-based monomer).

Examples of vinyl ester compounds include vinyl formate, vinyl acetate, vinyl trifluoroacetate, vinyl propionate, vinyl butyrate, vinyl caprate, vinyl laurate, vinyl versatate, vinyl palmitate, vinyl stearate, and vinyl pivalate. Preferably, vinyl acetate is used. These vinyl ester compounds may be used singly or in combination of two or more.

The PVA-based resin may be an unmodified or modified PVA-based resin. The modified PVA-based resin may be produced by copolymerizing a vinyl ester compound and an unsaturated monomer other than vinyl ester compounds and saponifying the resulting copolymer. Alternatively, it may be produced by modifying the hydroxy group of the vinyl alcohol unit and/or the ester group of the vinyl ester unit in an unmodified PVA with cationic, anionic, hydrophobic groups, or the like.

The PVA-based resin content of the coating agent is 0.1 to 5.0 parts by mass relative to 100 parts by mass of the acrylic-based resin and is preferably 0.1 to 3.0 parts by mass, more preferably 0.1 to 2.0 parts by mass.

The total amount of the acrylic-based resin and the polyvinyl alcohol-based resin in the resin components of the coating agent is preferably 80% to 100% by mass, more preferably 90% to 100% by mass, and further preferably 95% to 100% by mass and may be 100% by mass.

The total amount of the acrylic-based resin and the polyvinyl alcohol-based resin in the solids of the coating agent is preferably 80% to 100% by mass, more preferably 85% to 100% by mass, and further preferably 90% to 100% by mass. When the coating agent contains a surfactant, an initiator, a neutralizer, a preservative, or the like, these are also included in the solids.

The solids content of the coating agent is preferably 0.5% to 55% by mass, more preferably 1.0% to 50% by mass, and further preferably 1.5% to 45% by mass. When the coating agent contains a surfactant, an initiator, a neutralizer, a preservative, or the like, these are also included in the solids.

### [Production Method of Coating Agent for Open-Air Pile]

The coating agent for an open-air pile according to the present invention may be produced by adding the PVA-based resin to the acrylic-based resin. Alternatively, the coating agent for an open-air pile according to the present invention may be produced by polymerizing the acrylic-based resin from the raw materials of the acrylic-based resin and adding the PVA-based resin at at least one timing selected from before, during, and after the polymerization.

### [Method for Preventing Dust Generation from and/or Moisture Increase in Open-Air Pile]

The method according to the present invention for preventing dust generation from and/or moisture increase in an open-air pile comprises spraying an O/W emulsion containing acrylic-based resin and polyvinyl alcohol-based resin onto an open-air pile.

Preferably, the acrylic-based resin is a styrene acrylic resin and/ or a vinyl acetate acrylic resin.

### <Open-Air Pile>

In the present invention, the open-air pile to be treated refers to a material such as coal, ore, coke, slag, dust, wood shavings, paper sludge, or the like piled in an outdoor storage yard.

### <Spraying Method>

The method for spraying the coating agent onto an open-air pile may be performed by, but not particularly limited to, spraying from a sprinkler truck to the pile, spraying from an outdoor stacker, or selecting an appropriate pump or nozzle according to the individual case.

The amount of spraying is appropriately determined according to the coating agent used and the degree of prevention of dust or moisture increase required for the open-air pile. Preferably, the coating agent diluted is sprayed onto the open-air pile in an amount per surface area of about 1 L/m² to 3 L/m².

After spraying, the coating agent is naturally dried to form a film.

The thus formed coating film is thick and strong and is accordingly effective in preventing dust. Also, the coating film is unlikely to crack and, therefore, does not allow moisture to penetrate easily, thus being highly effective in preventing moisture increase. As a result, the coating film is also effective in preventing coal flows.

### Examples

Although the present invention will be further described in detail based on Examples, the present invention is not limited by the following Examples.

### [Raw Materials]

The following raw materials were used:
<Styrene-based Monomer>
   · ST: Styrene
<Vinyl Acetate-based Monomer>
   · VA: Vinyl acetate
<Acrylic Monomer>
   · 2EHA: 2-Ethylhexyl acrylate
   · MMA: Methyl methacrylate
   · BA: Butyl acrylate
   · AAC: Acrylic acid
<PVA>
   · PVA 1 (viscosity-average degree of polymerization: 2400, saponification degree: 88)
   · PVA 2 (viscosity-average degree of polymerization: 1500, saponification degree: 88)
   · PVA 3 (viscosity-average degree of polymerization: 500, saponification degree: 88)
   · PVA 4 (viscosity-average degree of polymerization: 3300, saponification degree: 88)

### [Evaluation]

### (1) Film Strength and Film Thickness

Coating agents of Examples and Comparative Examples were evaluated as described below.

A container of 30 cm in length, 15 cm in width, and 10 cm in height was charged with coal with a particle size of 5 mm or less and was, in this state, naturally dropped 10 times from a height of about 1 cm to adjust the height of the coal filling layer to 5 cm and flatten the top surface of the filling layer. The coating agent (O/W emulsion) was sprayed onto the top surface of the resulting coal layer in an amount per top surface area of 2 L/m² with a spray. Then, the coal layer was naturally dried, and the film strength and thickness of the resulting coating film were measured.

The film strength was measured at five points for each sample with a Yamanaka hardness tester, and the measurements were averaged.

The film thickness was measured at five points for each sample with a vernier caliper, and the measurements were averaged.

### [Production of Coating Agent: Method 1]

A pre-emulsion (60 mass% solids content) containing the styrene-based monomer or the vinyl acetate-based monomer, an acrylic monomer(s), PVA, a surfactant (LATEMUL E-1000A / Kao / 30 mass% product), and an initiator (ammonium persulfate) was dropped in a nitrogen atmosphere at a reaction temperature of 85°C over 2 hours and was then aged at 85°C for 3 hours to yield a reaction liquid. A neutralizer was added to the resulting reaction liquid to obtain a coating agent.

The blended proportions of the styrene-based monomer, vinyl acetate-based monomer, acrylic monomers, and PVA are presented in Table 1.

The resulting coating agent was evaluated in terms of film thickness and film strength according to the above-described evaluation methods. The results are presented in Table 1.

### [Production of Coating Agent: Method 2]

A coating agent (O/W emulsion) was produced in the same manner as in the above method 1, except that a neutralizer and PVA were added to the reaction liquid together instead of adding PVA to the pre-emulsion.

The blended proportions of the styrene-based monomer, vinyl acetate-based monomer, acrylic monomers, and PVA are presented in Table 1.

The resulting coating agent was evaluated in terms of film thickness and film strength according to the above-described evaluation methods. The results are presented in Table 1.

### [Production of Coating Agent: Method 3]

A coating agent was produced in the same manner as in the above method 1, except that PVA was added to the pre-emulsion and also added to the reaction liquid together with the neutralizer. The blended proportions of the styrene-based monomer, vinyl acetate-based monomer, acrylic monomers, and PVA are presented in Table 1.

The resulting coating agent was evaluated in terms of film thickness and film strength according to the above-described evaluation methods. The results are presented in Table 1.

**Table 1**

| | Raw material (part(s) by mass) | | | | | | | | | | Production method for coating agent | Evaluation | |
|---|---|---|---|---|---|---|---|---|---|---|---|---|---|
| | ST | VA | 2EHA | MMA | BA | AAC | PVA1 (2400) | PVA2 (1500) | PVA3 (500) | PVA4 (3300) | | Film thickness (mm) | Film strength (mm) |
| Example 1 | 42 | | 51 | 5 | | 2 | 0.2 | | | | 1 | 9.6 | 11.2 |
| Example 2 | 42 | | 51 | 5 | | 2 | | 0.2 | | | 1 | 11.4 | 15.4 |
| Example 3 | 42 | | 51 | 5 | | 2 | 0.1 | 0.3 | | | 1 | 10.4 | 10.6 |
| Example 4 | 15 | | | 13 | 70 | 2 | 0.2 | | 0.6 | | 1 | 10.5 | 15.8 |
| Example 5 | 15 | | | 13 | 70 | 2 | 0.5 | 0.5 | 0.5 | | 2 | 6.9 | 23.6 |
| Example 6 | 45 | | 3 | | 50 | 2 | | | 0.5 | 0.5 | 2 | 7.5 | 15.4 |
| Example 7 | 42 | | 51 | 5 | | 2 | | 1.0 | | | 2 | 13.0 | 11.4 |
| Example 8 | 42 | | 51 | 5 | | 2 | 1.0 | | | | 2 | 12.8 | 11.8 |
| Example 9 | 42 | | 51 | 5 | | 2 | | | 1.0 | | 2 | 12.2 | 12.6 |
| Example 10 | 42 | | 51 | 5 | | 2 | | | | 1.0 | 2 | 11.8 | 11.2 |
| Example 11 | 33 | | 50 | 5 | 10 | 2 | 0.3 | 0.1 | 0.1 | 1.5 | 3 | 8.8 | 18.8 |
| Example 12 | | 80 | | | 20 | | | 1.6 | | | 1 | 9.6 | 13.2 |
| Example 13 | | 20 | 42 | 38 | | | 1 | | 0.5 | | 1 | 9.5 | 8.3 |
| Example 14 | | 15 | | 40 | 45 | | | | 2 | | 1 | 9.5 | 9.7 |
| Example 15 | | 80 | | | 20 | | | 1.6 | | | 1 | 10.8 | 10.8 |
| Example 16 | | 60 | | 17 | 23 | | 0.1 | | | 0.1 | 1 | 9.5 | 11.0 |
| Comparative Example 1 | 42 | | 51 | 5 | | 2 | | | | | - | 9.6 | 6.4 |
| Comparative Example 2 | | 40 | | | 60 | | | | | | - | 10.2 | 4.0 |

Table 1 shows that the coating agents of Examples, which contain PVA-based resin, provide higher film strength than those of Comparative Examples, which do not contain PVA-based resin.

## Claims

1. A method for preventing dust generation from and/or moisture increase in an open-air pile, comprising spraying an O/W emulsion comprising acrylic-based resin and polyvinyl alcohol-based resin onto the open-air pile,
wherein the polyvinyl alcohol -based resin content of the O/W emulsion is 0.1 to 5.0 parts by mass relative to 100 parts by mass of the acrylic-based resin.

2. The method for preventing dust generation from and/or moisture increase in an open-air pile according to claim 1, wherein the acrylic-based resin is a styrene acrylic resin and/ or a vinyl acetate acrylic resin.

## Patentansprüche

1. Verfahren zum Verhindern von Staubbildung durch und/oder Feuchtigkeitszunahme in einem Freiluftstapel, umfassend das Aufsprühen einer O/W-Emulsion, die Acryl-basiertes Harz und Polyvinylalkohol-basiertes Harz umfasst, auf den Freiluftstapel,
wobei der Gehalt an Polyvinylalkohol-basiertem Harz in der O/W-Emulsion 0,1 bis 5,0 Masseteile, bezogen auf 100 Masseteile des Acryl-basierten Harzes, ist.

2. Verfahren zum Verhindern von Staubbildung durch und/oder Feuchtigkeitszunahme in einem Freiluftstapel nach Anspruch 1, wobei das Acrylbasierte Harz ein Styrol-Acryl-Harz und/oder ein Vinylacetat-Acryl-Harz ist.

## Revendications

1. Procédé pour empêcher la génération de poussière provenant d'un tas à l'air libre et/ou l'augmentation d'humidité dans celui-ci, comprenant la pulvérisation d'une émulsion H/E comprenant une résine à base d'acrylique et une résine à base de poly(alcool vinylique) sur le tas à air libre,
la teneur en résine à base de poly(alcool vinylique) de l'émulsion H/E étant de 0,1 à 5,0 parties en masse par rapport à 100 parties en masse de la résine à base d'acrylique.

2. Procédé pour empêcher la génération de poussière par et/ou l'augmentation de l'humidité dans un tas à l'air libre selon la revendication 1, dans lequel la résine à base d'acrylique est une résine styrène acrylique et/ou une résine acétate de vinyle acrylique.
